# EUROPEAN PATENT SPECIFICATION

(11) **EP 2 423 051 B1**
(45) Date of publication and mention of the grant of the patent: **18.09.2013**
(21) Application number: 11178999.6
(22) Date of filing: 26.08.2011
(51) Int. Cl.: B60R 19/02, B62D 35/00

(54) **Vehicular lower duct structure**
Untere Leitungsstruktur für ein Fahrzeug
Structure de conduit inférieur de véhicule

(30) Priority: 31.08.2010 JP 2010194401
(43) Date of publication of application: 29.02.2012
(73) Proprietor: Honda Motor Co., Ltd., Tokyo 107-8556 (JP)
(72) Inventor: Ichikawa, Tomoaki, Saitama, 351-0193 (JP); Sasaki, Katsuaki, Saitama, 351-0193 (JP)
(74) Representative: Herzog, Markus

(56) References cited:
- EP-A2- 1 867 525
- FR-A1- 2 911 557
- US-A1- 2009 160 203

## Description

The present invention relates to a bumper face according to the preamble part of claim 1. A bumper face of the generic kind is known from FR 2911557 A1.

The vehicular lower duct structures are designed to introduce cooling air from in front of the vehicle to component parts of a cooling system (cooling-system component parts) of the vehicle. One example of such vehicular lower duct structures is disclosed in Japanese Patent No. 4317203 (hereinafter referred to as "the prior patent literature"), which includes an external object protection structure provided on a front section of the vehicle (more specifically, on a lower member of a front bulkhead) for protecting a leg of a pedestrian.

The lower duct structure disclosed in the prior patent literature includes a plurality of upper reinforcing beads that are provided spaced apart from one another in a vehicle width direction, and a plurality of lower reinforcing beads that are provided under the upper reinforcing beads in superposed relation to respective ones of the upper reinforcing beads. More specifically, each of the upper reinforcing beads extends in a front-rear direction of the vehicle body and has an inverted-U cross-sectional shape opening downwardly, and each of the lower reinforcing beads extends in the front-rear direction of the vehicle body and has a U cross-sectional shape opening upwardly toward the corresponding upper reinforcing bead.

Further, the lower duct structure disclosed in the prior patent literature is formed in a generally rectangular shape as viewed in plan and has a rear end section (or mounting part) mounted to the lower member of the front bulkhead. Namely, a front end section of the lower duct structure has generally the same width dimension as the rear end section of the lower duct structure.

When a leg of a pedestrian has collided with (or strongly contacted) the front section of the vehicle, the lower duct structure can cause reactive force of a collision load (i.e., load input to the front section of the vehicle due to the collision) to act on the leg of the pedestrian. By thus causing the reactive force to act on the pedestrian's leg, the lower duct structure can scoop up the pedestrian's leg to cause the pedestrian to fall or incline toward the vehicle. In this way, the lower duct structure can prevent the pedestrian's leg from getting caught under the vehicle and thereby protect the pedestrian's leg. However, because the upper reinforcing beads and the lower reinforcing beads are vertically superposed on each other, the lower duct structure disclosed in the prior patent literature would increase in its vertical height dimension, which would pose considerable limitations in determining a design of the vehicle, i.e. reduce a degree of freedom in determining a design of the vehicle.

Further, in the lower duct structure disclosed in the prior patent literature, where the front and rear end sections of the lower duct structure have generally the same width dimension, a radiator support is supported by the rear end section (mounting member). Thus, when a leg of a pedestrian has collided with a portion of the vehicle located more outwardly, in the vehicle width direction, than the rear end section, it is difficult for the disclosed lower duct structure to protect the pedestrian's leg by sweeping or scooping up the leg, because of which it is difficult for the disclosed lower duct structure to secure a wide pedestrian's leg range.

It is an object of the present invention to provide a bumper face comprising a vehicular lower duct structure which is adapted to secure an increased pedestrian's leg protecting range.

In order to accomplish the above-mentioned object, the present invention provides a bumper face according to claim 1 comprising a vehicular lower duct structure for introducing cooling air from in front of a vehicle body to a cooling-system component part through an opening section provided in a bumper face, the vehicular lower duct structure comprising: a front guide section horizontally provided adjacent to and under the lower edge of the opening section in parallel to the lower edge, and having a concave bead of an upwardly-opening sectional shape extending in a front-rear direction of the vehicle body; and a rear guide section extending obliquely downwardly from a rear end portion of the front guide section toward a rear of the vehicle body, and having a convex bead of a downwardly-opening sectional shape extending in the front-rear direction of the vehicle body.

Because the front guide section is provided horizontally under the lower edge of the opening section provided in the bumper face and the rear guide section extends obliquely downwardly from the rear end portion of the front guide section, the front guide section can be disposed above or higher than the rear guide section. Such arrangements can significantly enhance a degree of freedom in determining a design of the vehicle.

Further, in the vehicular lower duct structure of the present invention, the front guide section has the concave bead, and the rear guide section has the convex bead. Thus, when a leg of a pedestrian has collided with a front section of the vehicle, the collision load can be transmitted to the convex bead of the rear guide section via the concave bead of the front guide section, more specifically, substantially horizontally via the bottom surfaces of the concave bead to the upper surface of the convex bead (with little level or height difference between the bottom surface of the concave bead and the upper surface of the convex bead).

Namely, the collision load can be appropriately borne by the concave bead of the front guide section and the convex bead of the rear guide section. In the aforementioned manner, reactive force of the collision load (i.e., load input to the front section of the vehicle due to the collision of the pedestrian's leg) can be caused to act on the pedestrian's leg to thereby sweep or scoop up the pedestrian's leg, so that the pedestrian can be inclined toward the vehicle without the leg being got caught under the vehicle. As a result, the present invention can reliably protect the pedestrian's leg.

The vehicular lower duct structure of the present invention further comprises a mounting part extending from a rear end portion of the rear guide section toward the rear of the vehicle body, the mounting part being mounted to a lower member of a front bulkhead supporting the cooling-system component part. Further, a dimension, in a vehicle width direction, of a front end part of the front guide section is greater than a dimension, in the vehicle width direction, of the mounting part. With the dimension, in the vehicle width direction, of the front end part of the front guide section greater than the dimension, in the vehicle width direction, of the mounting part, the lower duct structure of the present invention has left and right outer side portions projecting leftward and rightward from a middle portion of the lower duct structure. Further, a pair of the concave and convex beads are provided to extend along the left outer side edge of the lower duct structure, and another pair of the concave and convex beads are provided to extend along the right outer side edge of the lower duct structure. Thus, a collision load having acted on (or having been applied to) the left outer side portion can be borne appropriately by the concave and convex beads, while a collision load having acted on (or having been applied to) the right outer side portion can be borne appropriately by the concave and convex beads. In this way, when a leg of a pedestrian has collided with (strongly contacted) any one of left and right outer side portions of a front end part of the front guide section, located more outwardly in the vehicle width direction than the lower member of the mounting part, the collision load can be transmitted via the concave beads of the front guide section to the convex beads of the rear guide section.

Namely, the collision load can be appropriately borne by the concave beads of the front guide section and the convex beads of the rear guide section. In this manner, reactive force of the collision load (i.e., load input to the front section of the vehicle due to the collision of the pedestrian's leg) can be caused to act on the pedestrian's leg, having collided with any one of left and right outer side portions, to thereby scoop up the pedestrian's leg, so that the pedestrian can be inclined toward the vehicle without the leg being got caught under the vehicle. As a result, the present invention can reliably protect the pedestrian's leg and thereby secure an increased pedestrian's leg protecting range.

Preferably, the vehicular lower duct structure of the present invention has a left upward rib and a left downward rib formed along the left outer side edge and extending continuously with each other in the front-rear direction of the vehicle body, and a right upward rib and a right downward rib formed along the right outer side edge and extending continuously with each other in the front-rear direction of the vehicle body. By the provision of such upward and downward ribs, left auxiliary concave and convex beads are formed laterally outwardly of the left concave bead and left convex bead along the left outer side edge, while right auxiliary concave and convex beads are formed laterally outwardly of the right concave bead and right convex bead along the right outer side edge.

Such concave and convex beads can even further enhance rigidity of the left and right outer side portions of the front end part of the front guide section, and thus, an even greater collision load, having acted on any one of the left and right outer side portions of the front end part of the front guide section, can be transmitted along left and right outer side edge portions of the lower duct structure. Thus, the lower duct structure of the present invention can sweep or scoop up a pedestrian's leg, having collided with any one of the left and right outer side portions, to thereby protect the pedestrian's leg in an even more appropriate manner.

Preferably, the mounting part is fastened at left and right end portions thereof to the lower member of the front bulkhead by means of left and right bolts. Thus, the left and right end portions can be fastened to the lower member of the front bulkhead with an increased fastening strength. Further, preferably, left and right end portions of the mounting part are disposed on extension lines of the left and right convex beads, respectively; thus, the left and right bolts are on the extension lines of the left and right convex beads, respectively. Thus, a collision load, having acted on any one of the left and right outer side portions of the front end part of the front guide section, can be borne appropriately, so that the lower duct structure of the present invention can sweep or scoop up a pedestrian's leg, having collided with any one of the left and right outer side portions, to thereby protect the pedestrian's leg in a more appropriate manner.

Further, preferably, the mounting part is fixed at its middle portion, in the vehicle width direction, to the lower member by means of a clip. Thus, the middle portion of the mounting part can be readily fixed by the clip without much time and labor required, which can thereby facilitate mounting work of the middle portion of the mounting part.

Preferably, the bumper face includes a bottom panel section disposed under the front guide section and extending toward the rear of the vehicle body, and the lower duct structure of the present invention further comprises a mounting member projecting downward from the underside of at least one the front and rear guide sections to the bottom panel section so that the bottom panel section is mounted to a bottom portion of the mounting member, the bottom portion of the mounting member being disposed in substantially the same horizontal plane as the mounting part, so that the bottom panel section is disposed to extend generally horizontally.

Because the front guide section in the lower duct structure of the present invention is provided (or extends) horizontally and the rear guide section extends obliquely downward as noted above, a front half portion of the bottom panel section of the bumper face can be provided to extend horizontally along the front guide section while a rear half portion of the bottom panel section can be provided to slant or extend obliquely downward along the rear guide section. Thus, in a case where the vehicle in question has a relatively small height (vehicle height), the front half portion can be located at a height position corresponding to an appropriate portion of a leg of a pedestrian. Actually however, if the rear half portion of the bottom panel section is provided to extend obliquely downward, flows of introduced outside air may be undesirably prevented by the downwardly slanting rear half portion.

Thus, the preferred implementation of the present invention is constructed in such a manner that the mounting member projects downward from the underside of at least one the front and rear guide sections to the bottom panel section so that the bottom panel section is mounted to the bottom portion of the mounting member. The mounting member, projecting downward from the underside of at least one the front and rear guide sections, can be disposed in substantially the same horizontal plane (i.e., at generally the same height) as the mounting part. Thus, a substantial entirety of the bottom panel section can be disposed to extend generally horizontally. In this way, the lower duct structure of the present invention advantageously allows introduced outside air to flow smoothly along the underside of the bottom panel section.

The following will describe embodiments of the present invention, but it should be appreciated that the present invention is not limited to the described embodiments and various modifications of the invention are possible without departing from the basic principles. The scope of the present invention is therefore to be determined solely by the appended claims.

Certain preferred embodiments of the present invention will be described in detail below, by way of example only, with reference to the accompanying drawings, in which:
Fig. 1 is a perspective view illustrating a front vehicle body structure provided with a vehicular lower duct structure according to an embodiment of the present invention;
Fig. 2 is a sectional view taken in a front-rear direction of the vehicle body through a generally middle portion, in a vehicle width direction, of the front vehicle body structure provided with the vehicular lower duct structure according to the inventive embodiment;
Fig. 3 is an exploded perspective view of the lower duct structure;
Fig. 4 is an enlarged view of a section encircled at 4 in Fig. 1;
Fig. 5 is a perspective view of the lower duct structure of Fig. 4 taken from above;
Fig. 6 is a plan view of the lower duct structure according to the inventive embodiment;
Fig. 7 is a sectional view taken in the front-rear direction through a left outer side section of the lower duct structure of Fig. 1;
Fig. 8 is a sectional view taken along line 8 - 8 of Fig. 5;
Fig. 9 is a sectional view taken along line 9 - 9 of Fig. 5;
Fig. 10 is a view explanatory of an example manner in which cooling air is directed via the lower duct structure to cooling-system component parts;
Figs. 11A and 11B are schematic views illustrating an example manner in which a collision load is borne by a middle portion of the lower duct structure;
Fig. 12 is a view explanatory of an example manner in which a pedestrian is protected by the middle portion of the lower duct structure;
Figs. 13A and 13B are schematic views illustrating an example manner in which a collision load is borne by the left outer side portion of the lower duct structure; and
Fig. 14 is a view explanatory of an example manner in which a pedestrian is protected by the left outer side portion of the lower duct structure.

Description will now be given as to a vehicular low duct structure according to an embodiment of the present invention, in which the terms "front", "rear", "left" and "right" used herein represent directions as seen from a human driver of a vehicle operator.

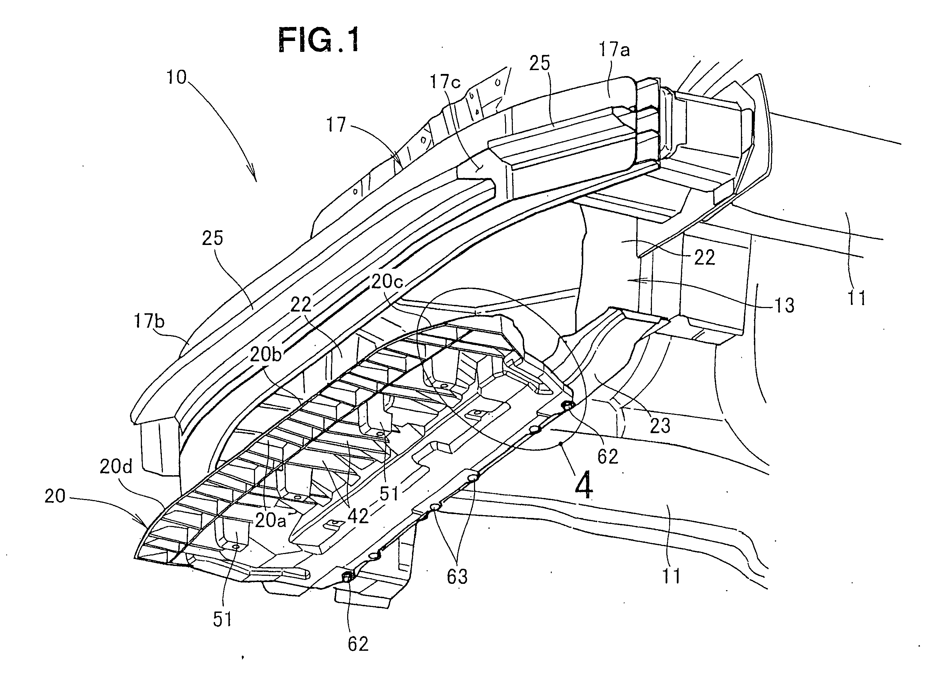

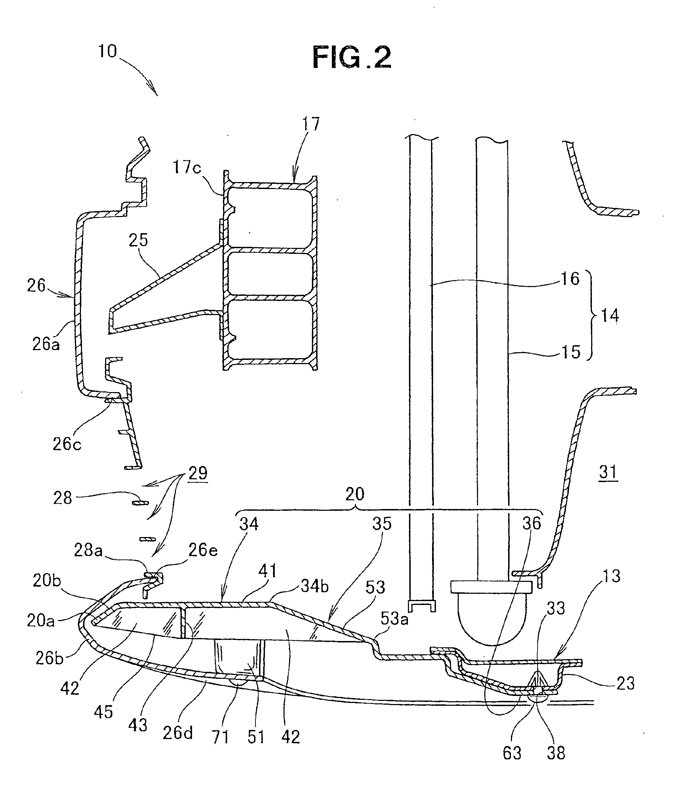

Fig. 1 is a perspective view showing a front vehicle body structure provided with the embodiment of the vehicular lower duct structure 20 of the present invention. As shown in Fig. 1, the front vehicle body structure 10 includes left and right front side frames 11 extending in a front-rear direction of the vehicle body, a front bulkhead mounted to respective front end portions of the left and right front side frames 11, and cooling-system component parts 14 (Fig. 2) provided on the front bulkhead 13.

The front vehicle body structure 10 further includes a front bumper beam 17 connected to the respective front end portions of the left and right front side frames 11, the vehicular lower duct structure 20 provided under the front bumper beam 17, and a front bumper face 26 (Fig. 2) covering the lower duct structure 20 and front bumper beam 17,

The front bulkhead 13 includes left and right stays 22 provided on the left and right front side frames 11, an upper member (not shown) secured to and connecting between upper end portions of the left and right stays 22, and a lower member 23 secured to and connecting between lower end portions of the left and right stays 22.

As shown in Fig. 2, the cooling-system component parts 14 are provided in front of and within the front bulk head 13 by being supported by the front bulk head 13.

The cooling-system component parts 14 include, for example, a radiator 15 and a condenser 16. The radiator 15 is a head exchanger provided within the front bulkhead 13 for cooling engine cooling water with outside air. The condenser 16 is a heat exchanger provided in front of the radiator 15 for cooling a cooling medium, to be used in a refrigerating cycle of an air conditioner, with outside air.

As shown in Fig. 1, the front bumper beam 17 has a left end portion 17a mounted to the front end portion of the left front side frame 11 by means of a bolt, and a right end portion 17b mounted to the front end portion of the right front side frame 11 by means of a bolt. An impact absorbing member 25 projects forward from a front wall portion 17c of the front bumper beam 17.

As shown in Fig. 2, the front bumper face 26 is disposed in front of the front bumper beam 17 and impact absorbing member 25. The front bumper face 26 includes an upper bumper face section 26a covering the front bumper beam 17 and impact absorbing member 25 from the front of them, a lower bumper face section 26b (Fig. 2) covering a front section 20a of the lower duct structure 20, and a bumper face opening section 26c formed between the upper bumper face section 26a and the lower bumper face section 26b.

The lower bumper face section 26b includes a bottom panel section 26d extending toward the rear of the vehicle body under front and rear guide sections 34 and 35.

Further, a radiator grille 28, which is mounted in the bumper face opening section 26c, has a plurality of outside-air introducing openings 29 for directing cooling air from outside toward an engine room 31.

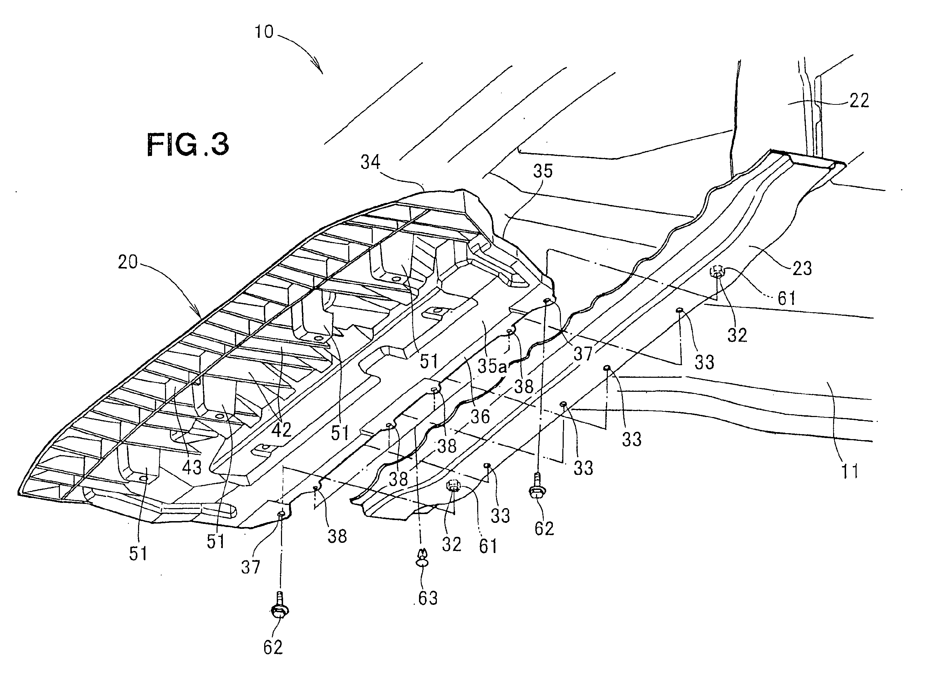

As shown in Figs. 2 and 3, the vehicular lower duct structure 20 functions not only as a duct structure for introducing cooling air, taken into the interior of the body vehicle via the plurality of outside-air introducing openings 29, to the cooling-system component parts 14, but also as an external object protecting structure for protecting a leg of a pedestrian. The vehicular lower duct structure 20 is provided under the front bumper beam 17 and bumper face opening section 26c.

More specifically, the lower duct structure 20 includes the front guide section 34 disposed adjacent to the bumper face opening section 26c (i.e., in a front end area of the vehicle body), the rear guide section 35 extending obliquely rearwardly (i.e., toward the rear of the vehicle body) and downwardly from a rear end portion of the front guide section 34, and a mounting part 36 extending rearwardly from a rear end portion of the rear guide section 35.

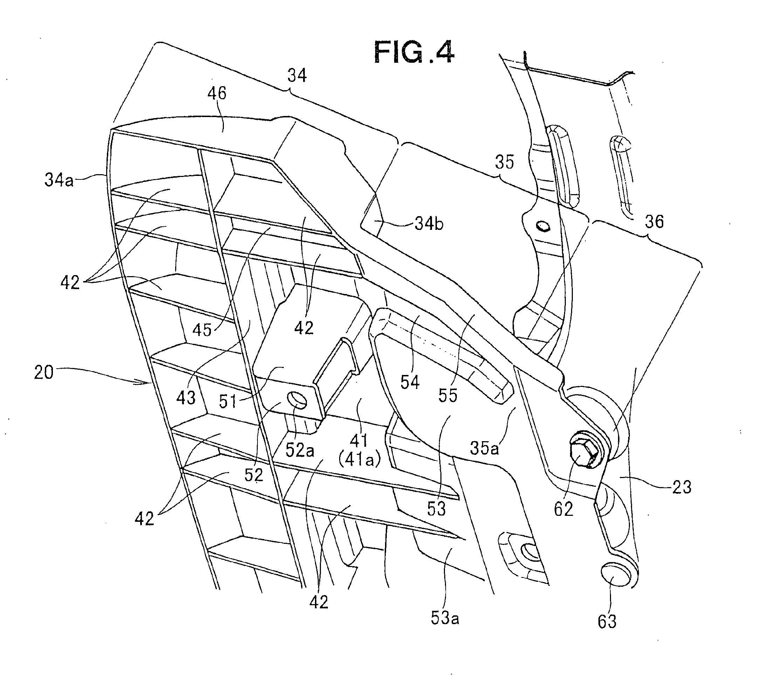

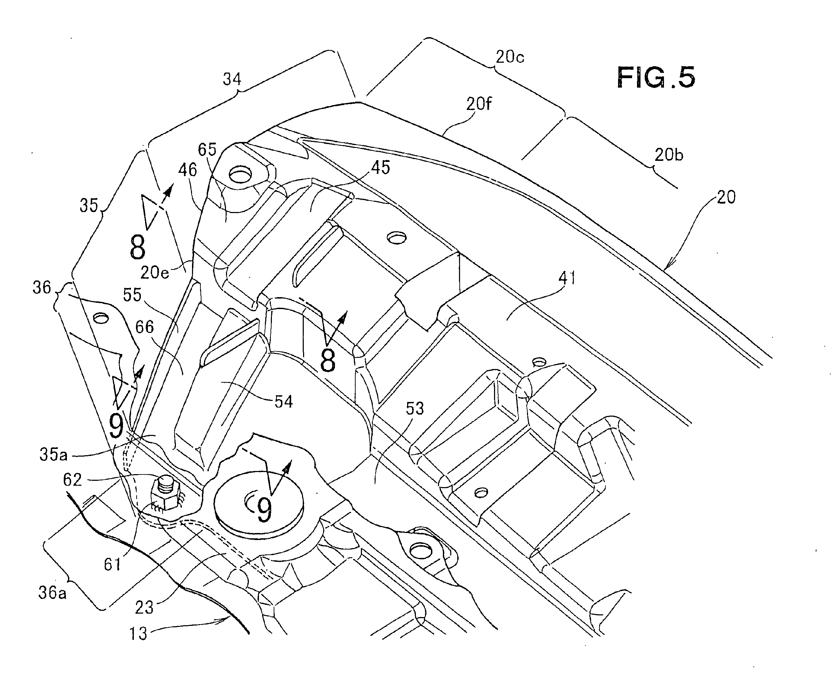

As shown in Figs. 4 and 5, the front guide section 34 includes a front guide panel 41 provided horizontally under the lower edge 26e of the bumper face opening section 26c (i.e., lower side 28a of the radiator grille 28) (see Fig. 2), a plurality of front ribs 42 projecting from the underside 41a of the front guide panel 41, and a front cross rib 43 extending in the vehicle width direction in such a manner as to perpendicularly intersect with the front ribs 42. The lower edge 26e of the bumper face opening section 26c extends generally horizontally in substantially parallel to the lower side 28a of the radiator grille 28 shown Fig. 2, and the front guide panel 41 extends generally horizontally under and in parallel to the lower side 28a of the radiator grille 28.

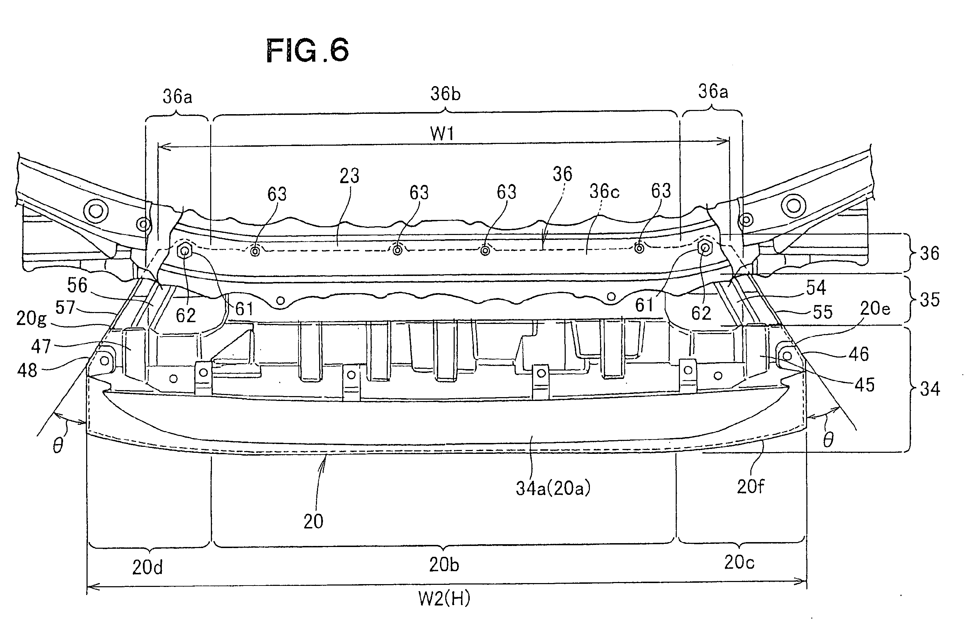

The front guide section 34 further includes a left concave bead 45 provided on the front guide panel 41 near a left side edge portion of the panel 41 (generally along the left outer side edge 20e of the lower duct structure 20), a left downward rib 46 provided on the left side edge portion of the panel 41 (along the left outer side edge 20e), a right concave bead 47 (Fig. 6) provided on the front guide panel 41 near a right side edge portion of the panel 41 (generally along the right outer side edge 20g of the lower duct structure 20), a right downward rib 48 (Fig. 6) provided on the right side edge portion of the panel 41 (along the right outer side edge 20g), and a plurality of mounting members 51 supporting the lower bumper face section 26b.

Some of the front ribs 42 extend to a generally middle portion 53a, in the vehicle width direction, of a rear guide panel 53 of the rear guide section 35.

The left and right concave beads 45 and 47 are disposed and constructed in left-right symmetrical relation to each other as shown in Fig. 6, and thus, the following mainly describe the left concave bead 45, omitting a description about the right concave bead 47. Similarly, the left and right downward ribs 46 and 48 are disposed and constructed in left-right symmetrical relation to each other, and thus, the following mainly describe the left downward rib 46, omitting a description about the right downward rib 48.

As further shown in Figs. 4 and 5, the rear guide section 35 includes the rear guide panel 53 extending from a rear end portion 34b of the front guide section 34 obliquely downward toward the rear of the vehicle body, a left convex bead 54 formed on the rear guide panel 53 near a left side edge portion of the panel 53 (along the left outer side edge 20e), a left upward rib 55 formed on the left side edge portion of the panel 53 (along the left outer side edge 20e), a right concave bead 56 (Fig. 6) formed on the rear guide panel 53 near a right side edge portion of the panel 53 (along the right outer side edge 20g), a right upward rib 57 (Fig. 6) formed on the right side edge portion of the panel 53 (along the right outer side edge 20g).

By extending from the rear end portion 34b of the front guide section 34 obliquely downward toward the rear of the vehicle body, the rear guide panel 53 slants downward with respect to the lower edge 26e of the bumper face opening section 26c (i.e., lower side 28a of the radiator grille 28). Further, by extending from the rear end portion 34b of the front guide section 34 obliquely downward toward the rear of the vehicle body as noted above, the front guide section 34 can be located above or higher than the rear guide section 35. Thus, in a case where the vehicle has a relatively small height, the front guide section 34 can be located at a height position corresponding to an appropriate portion of a leg of a pedestrian.

The left and right convex beads 54 and 56 are disposed and constructed in left-right symmetrical relation to each other as shown in Fig. 6, and thus, the following mainly describe the left convex bead 54, omitting a description about the right convex bead 56. Similarly, the left and right upward ribs 55 and 57 are disposed and constructed in left-right symmetrical relation to each other, and thus, the following mainly describe the left upward rib 55 omitting a description about the right upward rib 57.

As shown in Figs. 3 and 6, the above-mentioned mounting part 36 projects rearwardly (i.e., toward the rear of the vehicle body) from the rear end portion 35a of the rear guide section 35, a bolt mounting hole 37 is formed in each of left and right end portions 36a thereof, and a plurality of clip mounting holes 38 are formed in a middle portion 36b, in the vehicle width direction, of the mounting part 36.

The lower member 23 of the front bulkhead 13 has bolt mounting holes 32 formed therein in coaxial relation to the bolt mounting holes 37, and nuts 61 welded thereto in coaxial relation to respective ones of the bolt mounting holes 32. The mounting part 36 is fastened at its left and right end portions 36a to the lower member 23 of the front bulkhead 13 by means of bolts 62 screwed to the nuts 61 through the bolt mounting holes 37 and 32, for a reason to be described later.

The lower member 23 of the front bulkhead 13 further has a plurality of clip mounting holes 33 formed therein in coaxial relation to the clip mounting holes 38 formed in the mounting part 36. The mounting part 36 is fixed at its middle portion 36b to the lower member 23 of the front bulkhead 13 merely by means of clips 63 inserted through the clip mounting holes 38 into the clip mounting holes 33.

By the use of the clips 63, the middle portion 36b of the mounting part 36 can be readily and efficiently mounted to the lower member 23 as compared to a case where the middle portion 36b of the mounting part 36 is mounted to the lower member 23 of the front bulkhead 13 by bolts 62. In this way, the middle portion 36b of the mounting part 36 can be readily fixed by the clips 63 without much time and labor required, which can thereby facilitate mounting work of the middle portion 36b.

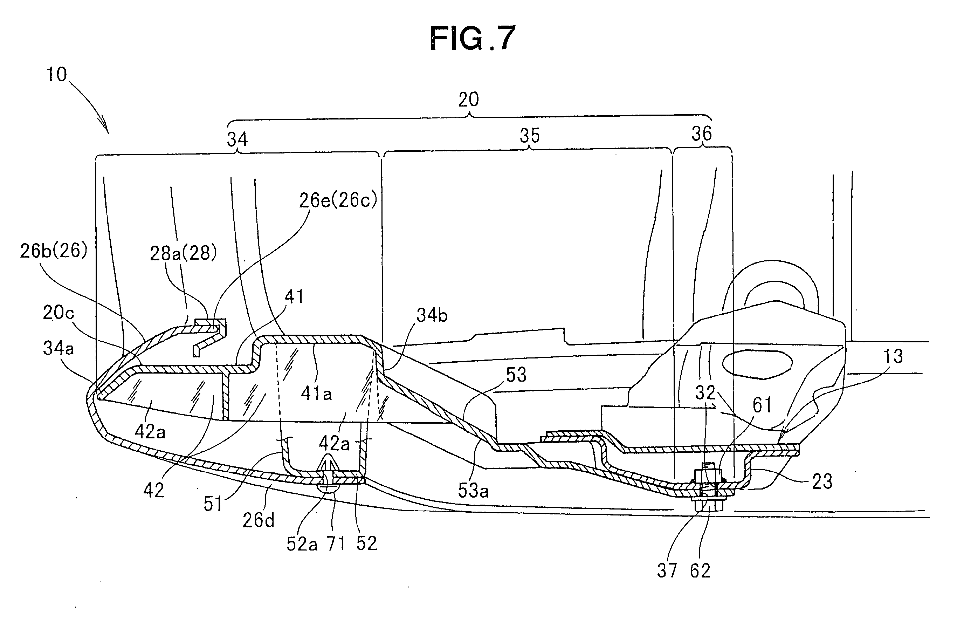

Further, as shown in Figs. 2 and 7, the mounting part 36 of the lower duct structure 20 is mounted to the lower member 23 of the front bulkhead 13 by means of the bolts 62, nuts 61 and clips 63; thus, the lower duct structure 20 can be provided under the front bumper beam 17 and bumper face opening section 26c. In this way, cooling air can be introduced from in front of the vehicle body to the cooling-system component parts via the bumper face opening section 26c (more specifically, via the outside-air introducing openings 29 of the radiator grille 28).

In addition, the front guide section 34 (front guide panel 41) of the lower member 23 is provided horizontally under the lower edge 26e of the bumper face opening section 26c, and the rear guide section 35 projects rearwardly and downwardly from the rear end portion 34b of the front guide section 34. Thus, the front guide section 34 can be located at a higher position than the rear guide section 35, so that it is possible to enhance a degree of freedom in determining a design of the front vehicle body structure and hence the vehicle.

Further, as shown in Fig. 6, the lower duct structure 20 has a substantially trapezoidal overall shape as viewed in plan with a dimension W2, in the vehicle width direction, of a front end part 34a of the front guide section 34 (front section 20a of the lower duct structure 20) greater than a dimension W1, in the vehicle width direction, of the mounting part 36. Namely, a middle portion 20b, in the vehicle width direction, of the lower duct structure 20 has a substantially rectangular overall shape as viewed in plan, and left and right outer side portions 20c and 20d each have a substantially triangular shape (or substantially pentagonal shape) as viewed in plan.

Further, the middle portion 20b of the lower duct structure 20 has the plurality of front ribs 42 shown in Fig. 5, some of which extend to the generally middle portion 53a of the rear guide panel 53 of the rear guide section 35. The front ribs 42, provided on the middle portion 20b of the lower duct structure 20, can reinforce (increase rigidity of) the middle portion 20b. Thus, when a leg of a pedestrian has collided with (or strongly contacted) the front section of the vehicle, a collision load (i.e., load input to the vehicle front section due to the collision) can be dispersedly transmitted to the rear guide section 35 by way of the front guide section 34 (mainly the plurality of front ribs 42).

Lower end portions 42a of the front ribs 42 extend substantially horizontally continuously with the rear guide section 35 and the upper surface 23a of the lower member 23, and thus, a collision load (i.e., load input the front section of the vehicle due to a collision of a leg of a pedestrian) can be borne appropriately by the middle portion 20b of the lower duct structure 20. In this way, reactive force of the collision load can be caused to act on a leg of a pedestrian to thereby sweep or scoop up the pedestrian's leg, so that the instant embodiment can protect the pedestrian by causing the pedestrian to incline toward the front vehicle body structure (i.e., vehicle) while effectively preventing the pedestrian's leg from getting caught under the vehicle.

The left outer side portion 20c is formed in a substantially triangular shape (more specifically, substantially pentagonal shape) with respective left sides of the front guide section 34, rear guide section 35 and mounting part 36, and the left outer side portion 20c protrudes outwardly leftward from the middle portion 20b (particularly, from a left end portion of the mounting part 36).

Further, the left outer side portion 20c has the left outer side edge 20e extending rearward from the front end part 34a of the front guide section 34 to the rear end portion 36c of the mounting part 36. The left outer side portion 20c also includes the left concave bead 45 extending rearwardly from the front end part 34a of the front guide section 34, along the left outer side edge 20e, to the rear guide section 35, and the left convex bead 54 extending obliquely rearwardly, along the left outer side edge 20e, from the rear end portion 35a of the rear guide section 35.

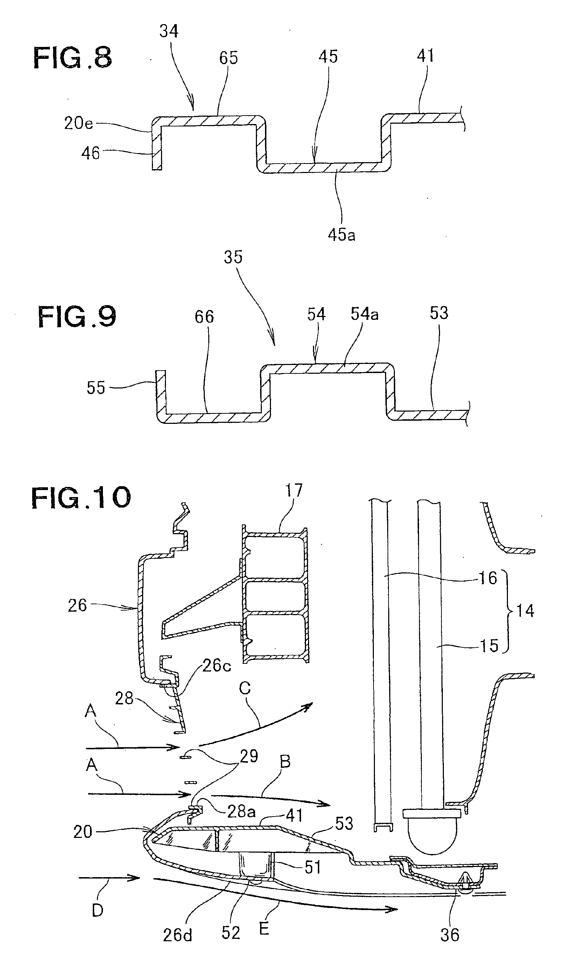

As shown in Figs. 5 and 8, the left concave bead 45 is a hollowed portion of an upwardly-opening, substantially U cross-sectional shape formed by a left side portion of the front guide panel 41 projecting downwardly. The left concave bead 45 extends in the front-rear direction of the vehicle body along the left outer side edge 20e. The left concave bead 45, thus formed on left side portion of the front guide panel 41, can reinforce (or increase rigidity of) the front guide section 34.

As shown in Figs. 5 and 9, the left convex bead 54 is a raised portion of a downwardly-opening, substantially U cross-sectional shape formed by a left side portion of the rear guide panel 53 raised upwardly. The left convex bead 54 extends along the left outer side edge 20e obliquely to the front-rear direction of the vehicle body with an inclination angle θ (Fig. 6) to the front-rear direction. The left convex bead 54, thus formed on left side portion of the rear guide panel 53, can reinforce (or increase rigidity of) the rear guide section 35.

Thus, when a collision load has been applied to, or has acted on, a front end portion 20f of the left outer side portion 20c from in front of the vehicle body, the collision load can be transmitted horizontally via the left concave bead 45 to the left convex bead 54, more specifically, substantially horizontally via the bottom surface 45a of the left concave bead 45 to the upper surface 54a of the left convex bead 54. Namely, the collision load applied to the front end portion 20f of the left outer side portion 20c can be borne by the left concave bead 45 and the left convex bead 54.

In the aforementioned manner, reactive force of the collision load (input load to the front section of the vehicle) can be caused to act on a leg of a pedestrian to thereby scoop up the pedestrian's leg, so that the instant embodiment can protect the pedestrian's leg by causing the pedestrian to incline toward the front vehicle body structure (i.e., vehicle). Thus, the instant embodiment can secure an increased pedestrian's leg protecting range H (see Fig. 6).

Further, as shown in Figs. 5, 8 and 9, the left outer side portion 20c of the vehicular lower duct structure 20 includes the left downward rib 46 extending from the front end part 34a of the front guide section 34, along the left outer side edge 20e, to the rear guide section 35, and the left upward rib 55 provided on the left outer side edge 20e.

The left downward rib 46 and the left upward rib 55 extend continuously with each other in the front-rear direction of the vehicle body. By the provision of the left downward rib 46, a left auxiliary convex bead 65 is formed laterally outwardly of the left concave bead 45 along the left outer side edge 20e, i.e. along the left- concave bead 45. The left auxiliary convex bead 65 is a donwardly-opening raised portion of a generally inverted-U sectional shape.

The left auxiliary convex bead 65 thus formed can even further increase the rigidity of the left outside portion 20c of the vehicular lower duct structure 20. Thus, a greater collision load applied to the left outer side portion 20c from in front of the vehicle body can be transmitted rearwardly along the left outside portion 20c. Thus, the instant embodiment can even more appropriately sweep or scoop up a pedestrian's leg, having collided with the left outside portion 20c, so that the instant embodiment can even more appropriately protect the pedestrian's leg.

In addition, the mounting part 36 is fastened at its the left end portion 36a to the lower member 23 of the front bulkhead 13 by means of the bolt 62 screwed through the bolt mounting holes 37 and 32 to the nut 61. Thus, the left end portion 36a of the mounting part 36 can be secured fastened to the lower member 23 by the bolt 62 and nut 61.

In the instant embodiment, the left end portion 36a of the mounting part 36 is disposed on an extension line of the left convex bead 54; thus, the bolt 62 and nut 61 are on the extension line of the left convex bead 54. In this way, the instant embodiment can appropriately scoop up a pedestrian's leg, having collided with the front end portion 20f of the left outer side portion 20c, so that the instant embodiment can appropriately protect the pedestrian's leg.

Further, as shown in Fig. 6, the right outer side portion 20d of the vehicular lower duct structure 20 is formed in a substantially triangular overall shape (more specifically, substantially pentagonal overall shape) with respective right sides of the front guide section 34, rear guide section 35 and mounting part 36, and it projects outwardly rightward from the middle portion 20b (namely, right side edge of the mounting part 36). Further, the right outer side portion 20d has a right outer side edge 20g extending from the front end part 34a of the front guide section 34 to the rear end portion 36c of the mounting part 36.

The right outer side portion 20d of the vehicular lower duct structure 20 is disposed and constructed in left-right symmetrical relation to the left outer side portion 20c of the vehicular lower duct structure 20 and thus will not be described in detail here to avoid unnecessary duplication.

With the right outer side portion 20d projecting outwardly rightward from the middle portion 20b of the lower duct structure 20 (i.e., right end portion of the mounting part 36), the instant embodiment can secure an even further increased pedestrian's leg protecting range H.

As shown in Figs. 4 and 7, the lower face section 26b (bottom panel section 26d) of the front bumper face 26 is supported by the plurality of mounting portions 51 each provided on and projecting downward from the underside 41a of the front guide section 34 (front guide panel 41) toward the bottom panel section 26d and having a bottom portion 52 capable of abutting against (contacting) the bottom panel section 26d.

Each of the mounting members 51 has a clip mounting hole 52a formed in the bottom portion 52, and the bottom panel section 26d is mounted to the bottom portions of the mounting members 51 by clips 71 inserted through the clip mounting holes 52 formed in the respective bottom portions 52. In this state, the bottom portion 52 of each of the mounting members 51 is horizontally located at generally the same height as the mounting part 36 of the lower duct structure 20.

With the bottom portion 52 of each of the mounting members 51 horizontally located at generally the same height as the mounting part 36 as noted above, the bottom panel section 26d can be mounted substantially horizontally. In this way, outside air introduced from in front of the vehicle body is allowed to flow smoothly along the underside of the bottom panel section 26d.

With reference to Fig. 10, the following describe an example manner in which cooling air is directed via the lower duct structure 20. As shown in Fig. 10, cooling air is introduced from in front of the vehicle body through the bumper face opening section 26c (outside-air introducing openings 29 of the radiator grille 28), as indicated by arrows A.

As set forth above, the vehicular lower duct structure 20 (comprising the front guide panel 41 and rear guide panel 53) is provided under the front bumper beam 17 and outside-air introducing openings 29 of the radiator grille 28, and because the front guide panel 41 extends generally horizontally in parallel to the lower side 28a of the radiator grille 28. Thus, cooling air introduced through lower ones of the outside-air introducing openings 29 of the radiator grille 28 can be directed as indicated by arrow B along the front guide panel 41 and downwardly-slanting rear guide panel 53, so that the thus-directed cooling air can be delivered to under the cooling-system component parts 14 (condenser 16 and radiator 15).

Meanwhile cooling air introduced upper ones of the outside-air introducing openings 29 of the radiator grille 28 can be directed upwardly as indicated by arrow C, so that the thus-directed cooling air can be delivered to over the cooling-system component parts 14 (condenser 16 and radiator 15). In the aforementioned manner, all of the cooling-system component parts 14 can be appropriately cooled with the cooling air.

Further, because the bottom portion 52 of each of the mounting members 51 is disposed in generally the same horizontal plane as (i.e., at generally the same height as) the mounting part 36 of the lower duct structure 20, and because the bottom panel section 26d of the lower bumper face section 26b is mounted horizontally, the cooling air introduced from in front of the vehicle body toward the bottom panel section 26d as indicated by arrow D is allowed to flow smoothly along the underside of the bottom panel section 26d as indicated by arrow E.

If the bottom portions 52 of the mounting members 51 are located above the mounting part 36 unlike in the above-described example, the bottom panel section 26d would be provided to slant downwardly toward the rear of the vehicle body, in which case flows of the outside air may be undesirably prevented by the downwardly-slanting bottom panel section 26d.

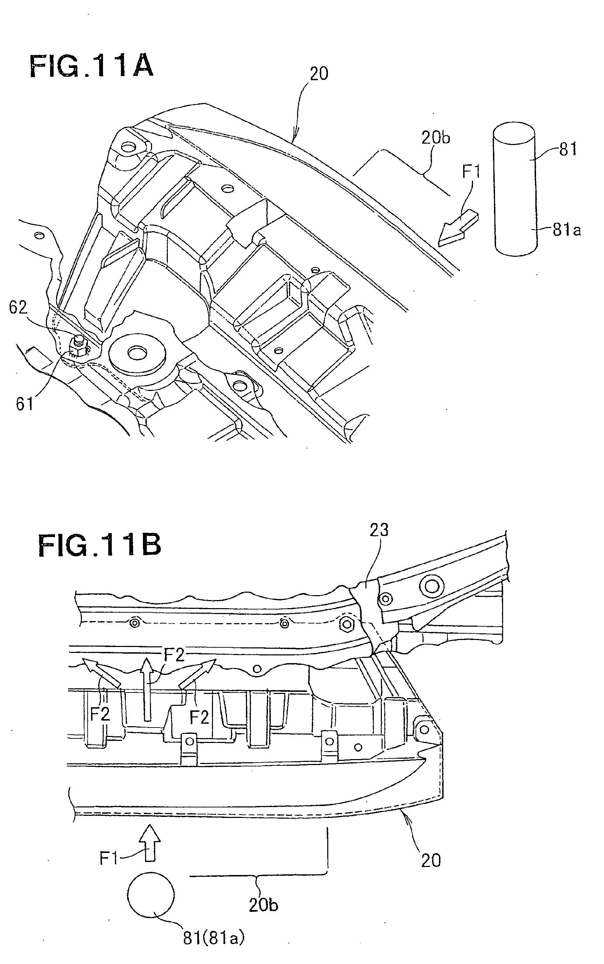

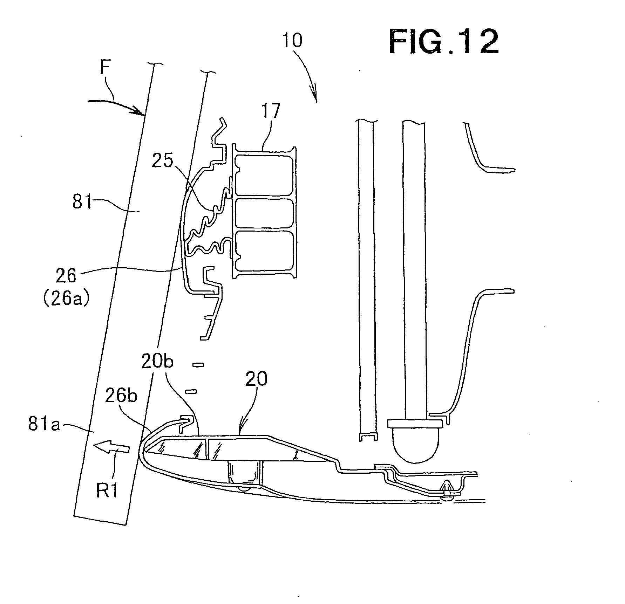

Next, with reference to Figs. 11 and 12, a description will be given about an example manner in which a leg 81a of a pedestrian 81 is protected by the middle portion 20b of the lower duct structure 20.

When a leg 81a of a pedestrian 81 has collided with (strongly contacted) the front section of the vehicle, a collision load F1 acts on a front end portion of the middle portion 20b of the lower duct structure 20 as indicated by arrow F1 in Fig. 11A.

Then, the collision load F1, having acted on the front end portion of the middle portion 20b, is dispersed into loads F2 in the lower duct structure 20 and transmitted toward the rear of the vehicle body. Because the collision load F1 is dispersed into the loads F2, the dispersed loads F2 can be borne by the middle portion 20b of the lower duct structure 20.

Further, as shown in Fig. 12, reactive force R1 of the collision load F1 (i.e., load input to the front section of the vehicle due to the collision) can be caused to act from the front end portion of the middle portion 20b on the pedestrian's leg 81a. Such reactive force R1 can scoop up the pedestrian's leg 81a and thereby prevent the pedestrian's leg 81a from getting caught under the vehicle.

Thus, the pedestrian 81 can be inclined toward the front vehicle body structure 10 as indicated by arrow F and run on a hood, during which time the impact absorbing member 25 is deformed (compressed) to absorb the collision load and thereby protect the pedestrian 81.

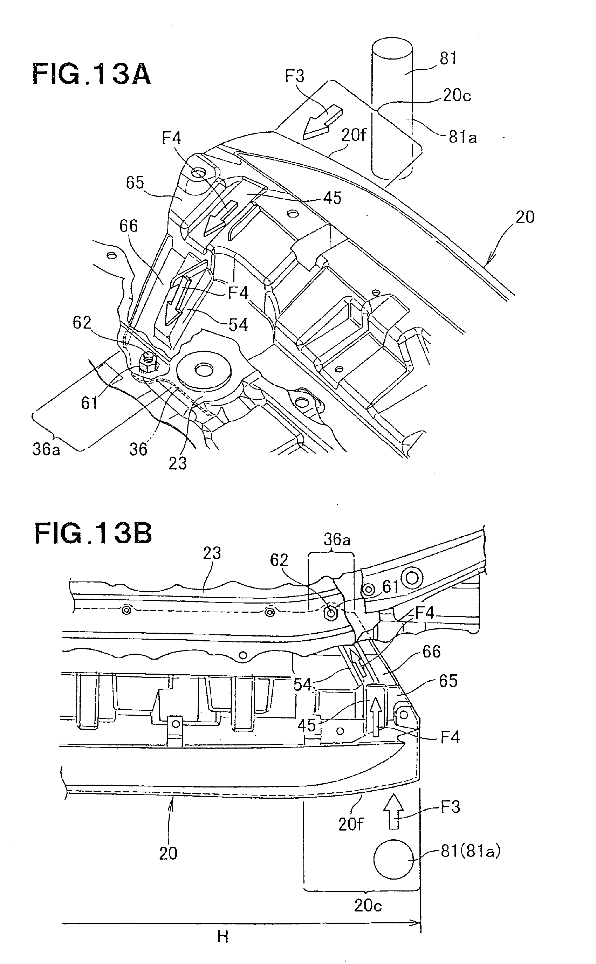

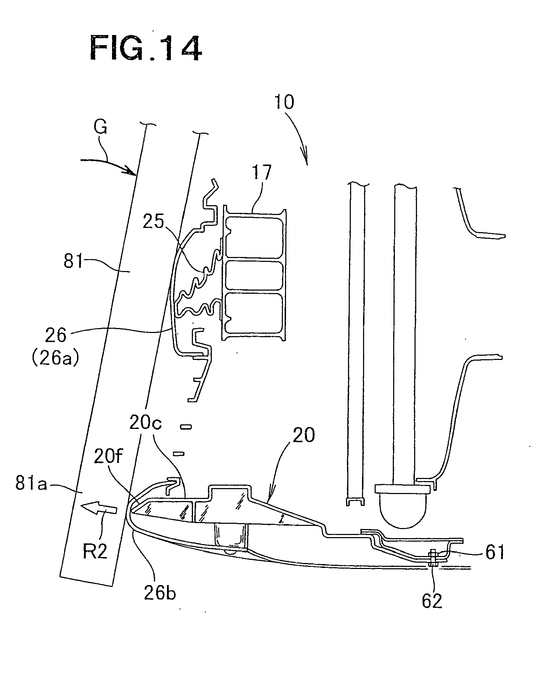

With reference to Figs. 13 and 14, the following describe an example manner in which a pedestrian 81 is protected by a laterally outer side edge region of the left end portion 36a of the mounting part 36.

When a leg 81a of the pedestrian 81 has collided with (contacted) the front section of the vehicle, a collision load F3 acts on the front end portion 20f of the left outer side portion 20c (i.e., laterally outer side edge region of the left end portion 36a) of the lower duct structure 20 as shown in Fig. 13A.

Namely, when the collision load has acted from in front of the vehicle body on the front end portion 20f of the left outer side portion 20c, the collision load F3 can be transmitted, as a load F4, substantially straight to the left concave bead 45 and left convex bead 54. Namely, the collision load having acted on the front end portion 20f of the left outer side portion 20c can be borne by the left concave bead 45 and left convex bead 54.

As shown in Fig. 13B, the left end portion 36a of the mounting part 36 is disposed on the extension line of the left convex bead 54, and the bolt 62 and nut 61 are disposed on the extension line of the left convex bead 54. Thus, the collision load F3 having acted on the front end portion 20f of the left outer side portion 20c can be borne even more reliably by the left concave bead 45 and left convex bead 54 and bolt 62 and nut 61.

Thus, as shown in Fig. 14, reactive force of the collision load F3 can be caused to act from the front end portion 20f of the left outer side portion 20c on the pedestrian's leg 81a.

Such reactive force R2 can scoop up the pedestrian's leg 81a, and thus, the pedestrian 81 can be inclined toward the front vehicle body structure 10, so that the impact absorbing member 25 is deformed (compressed) to absorb the collision load and thereby protect the pedestrian's leg 81a. In this way, the instant embodiment can secure an increased pedestrian's leg protecting range H (see Fig. 13B).

It should be appreciated that the lower duct structure 20 of the present invention is not limited to the above-described embodiment and may be modified variously.

For example, whereas the embodiment has been described above in relation to the case where the mounting member 51 is provided on the front guide section 34, the present invention is not so limited, and the mounting member 51 may be provided on the rear guide section 51 or may be provided in such a manner as to span between the front guide section 34 and the rear guide section 35.

Further, the shapes and constructions of the front vehicle body structure 10, front bulkhead 13, cooling-system component parts 14, lower duct structure 20, lower member 23, front bumper face 26, bumper face opening section 26c, bottom panel section 26d, front guide section 34, rear guide section 35, mounting part 36, left and right concave beads 45 and 47, left and right downward ribs 46 and 48, mounting members 51, bottom portions 52, left and right convex beads 54 and 56, left and right upward ribs 55 and 57, clips 63, etc are not limited to the aforementioned and illustratively shown in the drawings and may be modified as appropriate.

The basic principles of the present invention are well suited for applications to automotive vehicles provided with a lower duct structure for introducing cooling air from in front of the vehicle body to component parts of a cooling system of the vehicle through an opening section provided in a bumper face.

A vehicular lower duct structure (20) includes: a front guide section (34) provided horizontally under the lower edge of an opening section (26c) of a front bumper face (26) and having left and right concave beads (45, 47) opening upwardly and extending in a front-rear direction of a vehicle body; and a rear guide section (35) extending downwardly toward the rear of the vehicle body from a rear end portion (34b) of the front guide section (34) and having left and right convex beads (54, 56) opening downwardly and extending in the front-rear direction of the vehicle body.

## Claims

1. A bumper face (26) comprising a vehicular lower duct structure (20) for introducing cooling air from in front of a vehicle body to a cooling-system component part (14) through an opening section (26c), wherein the front bumper face (26) includes an upper bumper face section (26a) covering a front bumper beam (17) and an impact absorbing member (25) projecting forward from the front bumper beam (17), and a lower bumper face section (26b) covering a front section (20a) of the lower duct structure (20), wherein the bumper face opening section (26c) is formed between the upper bumper face section (26a) and the lower bumper face section (26b), the vehicular lower duct structure (20) comprising:
a front guide section (34) horizontally provided adjacent to and under a lower edge (26e) of the opening section (26c) in parallel to the lower edge (26e), and having a concave bead (45, 47) of an upwardly-opening sectional shape extending in a front-rear direction of the vehicle body; and
a rear guide section (35) having a convex bead (54, 56) of a downwardly-opening sectional shape extending in the front-rear direction of the vehicle body, wherein a pair of the concave and convex beads (45, 54) are provided to extend along a left outer side edge (20e) of the lower duct structure, and another pair of the concave and convex beads (47, 56) are provided to extend along a right outer side edge (20g) of the lower duct structure,
**characterized in that** the rear guide section (35) extends obliquely downwardly from a rear end portion (34b) of the front guide section (34) toward a rear of the vehicle body and the vehicular lower duct structure (20) further comprises a mounting part (36) extending from a rear end portion (35a) of the rear guide section (35) toward the rear of the vehicle body, the mounting part (36) being mounted to a lower member (23) of a front bulkhead (13) supporting the cooling-system component part (14), and
wherein a dimension, in a vehicle width direction, of a front end part (34a) of the front guide section (34) is greater than a dimension, in the vehicle width direction, of the mounting part (36).

2. The bumper face (26) comprising a vehicular lower duct structure according to claim 1, which has a left upward rib (55) and a left downward rib (46) formed along the left outer side edge to extend continuously with each other in the front-rear direction of the vehicle body, and a right upward rib (57) and a right downward rib (48) formed along the right outer side edge to extend continuously with each other in the front-rear direction of the vehicle body.

3. The bumper face (26) comprising a vehicular lower duct structure according to claim 1 or 2, wherein the mounting part (36) is fastened at left and right end portions thereof to the lower member (23) of the front bulkhead (13) by means of bolts (62), and the mounting part (36) is fixed at its middle portion, in the vehicle width direction, to the lower member (23) by means of a clip (63).

4. The bumper face (26) comprising a vehicular lower duct structure according to any one of claims 1 to claim 3, wherein the bumper face (26) includes a bottom panel section (26d) disposed under the front guide section (34) and extending toward the rear of the vehicle body, and
which further comprises a mounting member (51) projecting downward from an underside of at least one the front and rear guide sections (34, 35) to the bottom panel section (26d) so that the bottom panel section (26d) is mounted to a bottom portion (52) of the mounting member (51), the bottom portion (52) of the mounting member being disposed in a substantially same horizontal plane as the mounting part (51) so that the bottom panel section (26d) is disposed to extend generally horizontally.

## Patentansprüche

1. Stoßfängerfläche (26), umfassend eine untere Fahrzeug-Kanalstruktur (20), um Kühlluft von einer Vorderseite eines Fahrzeugkörpers durch einen Öffnungsabschnitt (26c) zu einem Kühlsystem-Bauteil (14) einzuleiten, wobei die vordere Stoßfängerfläche (26) einen oberen Stoßfänger-Flächenabschnitt (26a) umfasst, welcher einen vorderen Stoßfänger-Träger (17) und ein von dem vorderen Stoßfänger-Träger (17) nach vorne hin vorstehendes Stoß-absorbierendes Element (25) abdeckt, und einen unteren Stoßfänger-Flächenabschnitt (26b) umfasst, welcher einen vorderen Abschnitt (20a) von der unteren Kanalstruktur (20) abdeckt, wobei der Stoßfängerfläche-Öffnungsabschnitt (26c) zwischen dem oberen Stoßfänger-Flächenabschnitt (26a) und dem unteren Stoßfänger-Flächenabschnitt (26b) ausgebildet ist, wobei die untere Fahrzeug-Kanalstruktur (20) umfasst:
einen vorderen Führungsabschnitt (34), welcher horizontal benachbart und unter einem unteren Rand (26e) von dem Öffnungsabschnitt (26c) parallel zu dem unteren Rand (26e) vorgesehen ist, und einen konkaven Wulst (45, 47) mit einer nach oben öffnenden Schnittform hat, welcher sich in einer Längsrichtung des Fahrzeugkörpers erstreckt; und
einen hinteren Führungsabschnitt (35), welcher einen konvexen Wulst (54, 56) mit einer nach unten öffnenden Schnittform hat, welcher sich in der Längsrichtung des Fahrzeugkörpers erstreckt, wobei ein Paar von den konkaven und konvexen Wülsten (45, 54) derart vorgesehen sind, dass sie sich entlang eines linken äußeren Seitenrands (20e) von der unteren Kanalstruktur erstrecken, und ein anderes Paar von den konkaven und konvexen Wülsten (47, 56) derart vorgesehen sind, dass sie sich entlang eines rechten äußeren Seitenrands (20g) von der unteren Kanalstruktur erstrecken,
**dadurch gekennzeichnet, dass** der hintere Führungsabschnitt (35) sich von einem hinteren Endabschnitt (34b) von dem vorderen Führungsabschnitt (34) schräg nach unten zu einer Rückseite von dem Fahrzeugkörper hin erstreckt und die untere Fahrzeug-Kanalstruktur (20) ferner ein Montageteil (36) umfasst, welches sich von einem hinteren Endabschnitt (35a) von dem hinteren Führungsabschnitt (35) zu der Rückseite von dem Fahrzeugkörper hin erstreckt, wobei das Montageteil (36) an einem unteren Element (23) von einer vorderen Trennwand (13) angebracht ist, welche das Kühlsystem-Bauteil (14) abstützt, und
wobei eine Abmessung, in einer Fahrzeugbreitenrichtung, von einem vorderen Endteil (34a) von dem vorderen Führungsabschnitt (34) größer ist als eine Abmessung, in der Fahrzeugbreitenrichtung, von dem Montageteil (36).

2. Stoßfängerfläche (26), umfassend eine untere Fahrzeug-Kanalstruktur nach Anspruch 1, welche eine linke Aufwärtsrippe (55) und eine linke Abwärtsrippe (46) hat, welche entlang des linken äußeren Seitenrands ausgebildet sind, um sich kontinuierlich zueinander in der Längsrichtung des Fahrzeugkörpers zu erstrecken, und eine rechte Aufwärtsrippe (57) und eine rechte Abwärtsrippe (48) hat, welche entlang des rechten äußeren Seitenrands ausgebildet sind, um sich kontinuierlich zueinander in der Längsrichtung des Fahrzeugkörpers zu erstrecken.

3. Stoßfängerfläche (26), umfassend eine untere Fahrzeug-Kanalstruktur nach Anspruch 1 oder 2, wobei das Montageteil (36) an linken und rechten Endabschnitten davon an dem unteren Element (23) von der vorderen Trennwand (13) durch Bolzen (62) befestigt ist, und das Montageteil (36) in seinem mittleren Abschnitt, in der Fahrzeugbreitenrichtung, an dem unteren Element (23) durch einen Clip (63) fixiert ist.

4. Stoßfängerfläche (26), umfassend eine untere Fahrzeug-Kanalstruktur nach einem der Ansprüche 1 bis Anspruch 3, wobei die Stoßfängerfläche (26) einen Bodenplattenabschnitt (26d) umfasst, welcher unter dem vorderen Führungsabschnitt (34) angeordnet ist und sich zu der Rückseite von dem Fahrzeugkörper hin erstreckt, und welche ferner ein Montageelement (51) umfasst, welches von einer Unterseite von wenigstens einem von dem vorderen und dem hinteren Führungsabschnitt (34, 35) nach unten zu dem Bodenplattenabschnitt (26d) vorsteht, so dass der Bodenplattenabschnitt (26d) an einem Bodenabschnitt (52) von dem Montageelement (51) angebracht ist, wobei der Bodenabschnitt (52) von dem Montageelement im Wesentlichen in einer selben horizontalen Ebene wie das Montageteil (51) angeordnet ist, so dass der Bodenplattenabschnitt (26d) derart angeordnet ist, dass er sich im Allgemeinen horizontal erstreckt.

## Revendications

1. Pare-chocs (26) comprenant une structure inférieure de conduit de véhicule (20) pour introduire de l'air de refroidissement de l'avant d'une caisse de véhicule vers un composant de système de refroidissement (14) à travers une section d'ouverture (26c), dans lequel le pare-chocs avant (26) comprend une section supérieure de pare-chocs (26a) couvrant une poutre de pare-chocs avant (17) et un élément d'absorption d'impact (25) s'étendant vers l'avant depuis la poutre de pare-chocs avant (17), et une section inférieure de pare-chocs (26b) couvrant une section avant (20a) de la structure inférieure de conduit (20), dans lequel la section d'ouverture de pare-chocs (26c) est formée entre la section supérieure de pare-chocs (26a) et la section inférieure de pare-chocs (26b), la structure inférieure de conduit de véhicule (20) comprenant:
une section de guidage avant (34) prévue horizontalement adjacente à et en dessous d'un bord inférieur (26e) de la section d'ouverture (26c) parallèlement au bord inférieur (26e), et ayant un bourrelet concave (45, 47) d'une section s'ouvrant vers le haut s'étendant dans une direction avant-arrière de la caisse de véhicule;
et une section de guidage arrière (35) ayant un bourrelet convexe (54, 56) d'une section s'ouvrant vers le bas s'étendant dans la direction avant-arrière de la caisse du véhicule; dans lequel une paire de bourrelets concave et convexe (45, 54) est prévue pour s'étendre le long d'un bord latéral extérieur gauche (20e) de la structure inférieure de conduit, et une autre paire de bourrelets concave et convexe (47, 56) est prévue pour s'étendre le long d'un bord latéral extérieur droit (20g) de la structure inférieure de conduit,
**caractérisé en ce que** la section de guidage arrière (35) s'étend en oblique vers le bas depuis une partie d'extrémité arrière (34b) de la section de guidage avant (34) vers l'arrière de la caisse du véhicule et la structure inférieure de conduit de véhicule (20) comprend en outre une partie de montage (36) s'étendant depuis une partie d'extrémité arrière (35a) de la section de guidage arrière (35) vers l'arrière de la caisse du véhicule, la partie de montage (36) étant montée sur un élément inférieur (23) d'une cloison avant (13) supportant le composant du système de refroidissement (14), et
dans lequel une dimension, dans le sens de la largeur du véhicule, d'une partie d'extrémité avant (34a) de la section de guidage avant (34) est plus grande qu'une dimension, dans le sens de la largeur du véhicule, de la partie de montage (36).

2. Pare-chocs (26) comprenant une structure inférieure de conduit de véhicule suivant la revendication 1, qui a une nervure gauche vers le haut (55) et une nervure gauche vers le bas (46) formées le long du bord latéral extérieur gauche pour s'étendre en continu l'une avec l'autre dans la direction avant arrière de la caisse du véhicule, et une nervure droite vers le haut (57) et une nervure droite vers le bas (48) formées le long du bord latéral extérieur droit pour s'étendre en continu l'une avec l'autre dans la direction avant arrière de la caisse du véhicule.

3. Pare-chocs (26) comprenant une structure inférieure de conduit de véhicule suivant la revendication 1 ou 2, dans lequel la partie de montage (36) est fixée à des parties d'extrémité gauche et droite de celle-ci à l'élément inférieur (23) de la paroi avant (13) au moyen de boulons (62), et la partie de montage (36) est fixée à sa partie médiane, dans le sens de la largeur du véhicule, à l'élément inférieur (23) au moyen d'un clip (63).

4. Pare-chocs (26) comprenant une structure inférieure de conduit de véhicule suivant l'une des revendications 1 à 3, dans lequel le pare-chocs (26) comprend une section de panneau inférieur (26d) disposée en dessous de la section de guidage avant (34) et s'étendant vers l'arrière de la caisse du véhicule, et
qui comprend en outre un élément de montage (51) s'étendant vers le bas depuis une face inférieure d'au moins une des sections de guidage avant et arrière (34, 35) vers la section de panneau inférieur (26d) de façon à ce que la section de panneau inférieur (26d) soit montée sur une partie inférieure (52) de l'élément de montage (51), la partie inférieure (52) de l'élément de montage étant disposée essentiellement dans le même plan horizontal que la partie de montage (51), de sorte que la section de panneau inférieur (26d) est disposée pour s'étendre de manière généralement horizontale.
